# EUROPEAN PATENT APPLICATION

(11) **EP 1 524 474 A2**
(43) Date of publication of application: **20.04.2005**
(21) Application number: 04105016.2
(22) Date of filing: 13.10.2004
(51) Int. Cl.: F24F 7/00

(54) **Ventilated shelving storage system for cages containing laboratory animals**

(30) Priority: 13.10.2003 IT MI20031963
(71) Applicant: TECNIPLAST GAZZADA S.a.r.l., I-21020 Buguggiate, Varese (IT)
(72) Inventor: Campiotti, Alfredo, 21046 Malnate (IT); Tamborini, Paolo, 21019 Somma Lombardo (IT)
(74) Representative: Gervasi, Gemma, Dr.

(57) **Abstract**

A ventilated shelving storage system is described for cages containing laboratory animals, which provides for the installation of one or more horizontal wall guides (GO), to which one or more shelf ventilation units (VE) are connected. One or more shelves (SC) in series with a quick connection/release system are connected, in their turn, to the ventilation units. The ventilation units can run along the horizontal guides, by means of a motorised system (MO) if necessary.

## Description

The present invention concerns a ventilated shelving storage system for cages containing laboratory animals.

Special cages specifically designed to contain live laboratory animals, such as rodents, exist in the state of the art, identified by the acronym IVC (Individually Ventilated Caging system).

Said cages must be stored in premises specifically equipped for the purpose, in their turn subject to rigorous hygiene regulations.

In said premises the cages are stored in specific storage systems with ventilated shelving.

A number of problems arise with the design of said storage systems.

They must make optimal use of the space available in the animal housing premises in compliance with the required storage standards.

They must allow the operators to access them and shift them via manual movements that do not exceed certain values established by specific guidelines (some guidelines permit a maximum acceptable force by the operators of 200 N to move the shelves and 100 N to keep the shelves moving).

Movement of the shelves must not prevent cleaning and the passage of operators with transporters and/or laminar flow cabins, and the ceiling or floor must not be overloaded with supporting structures to the detriment of the services (room lighting and ventilation) which are now incorporated in the false ceiling or in purposely provided recesses in the ceiling.

The aim of the present invention is therefore to solve all the above problems and indicate a ventilated shelving storage system for cages containing laboratory animals which provides for the installation of one or more horizontal wall guides, to which one or more shelf ventilation units are connected. One or more shelves in series with a quick connection/release system are connected, in their turn, to the ventilation units. The ventilation units can run along the horizontal guides, by means of a motorised system if necessary.

To achieve said aims the present invention concerns a ventilated shelving storage system for cages containing laboratory animals, as better described in the claims which form an integral part of this description.

Further aims and advantages of the present invention will become clear from the following detailed description and from the attached drawings of an example of embodiment of the same intended as a non-restrictive illustration, in which:
- figure 1 shows a front view of the storage system subject of the present invention;
- figure 2 shows an overhead view of a ventilation unit with related shelves connected and an enlarged view of a detail of the connection/release system;
- figure 3 shows a second overhead view of the storage system;
- figure 4 shows a side view from the wall guide side of the ventilation unit;
- figure 5 shows a side section view of the motorised movement system.

The same reference numbers and reference letters in the various figures identify the same components or elements.

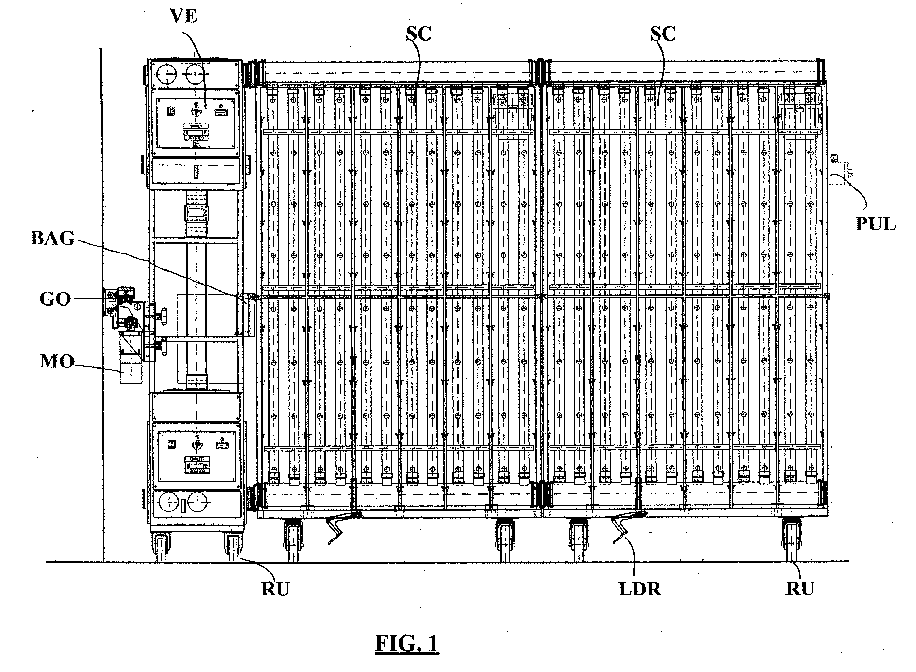

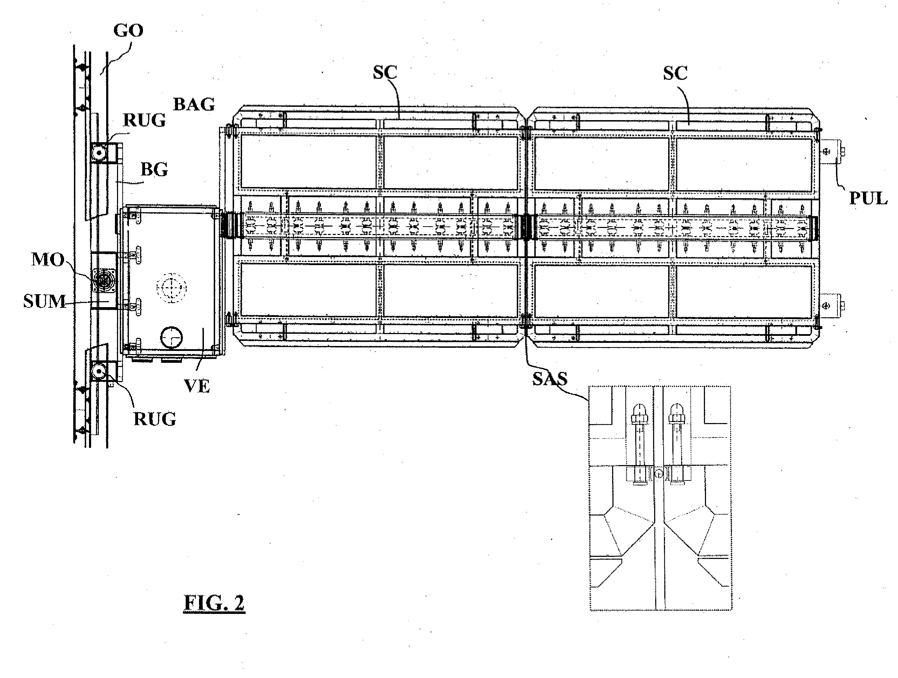

With reference to figures 1 and 2, a ventilation unit VE is connected to one or more shelves SC in series (the figures show two shelves as a non-limiting embodiment). The ventilation unit and the shelves are provided with wheels RU preferably of the pivoting type, for movement over the floor.

The ventilation units and shelves are essentially of known type. The shelves are preferably of the type with double front, i.e. accessible from both sides for storage of the cages front and back.

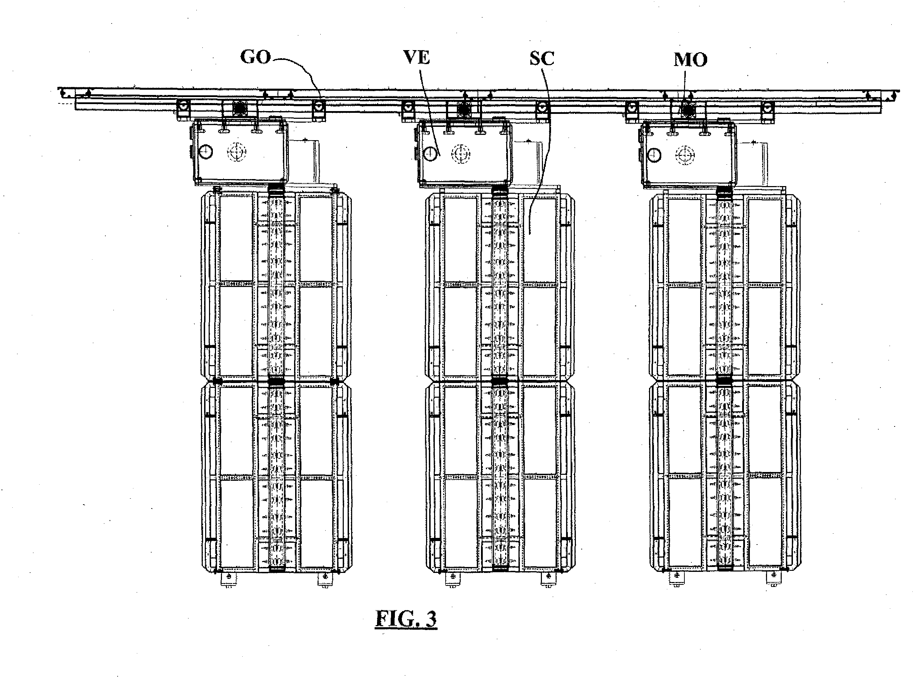

As shown also in figure 3, a horizontal wall guide GO is provided to which several ventilation units VE are connected with related shelves SC which can therefore run horizontally along the guide.

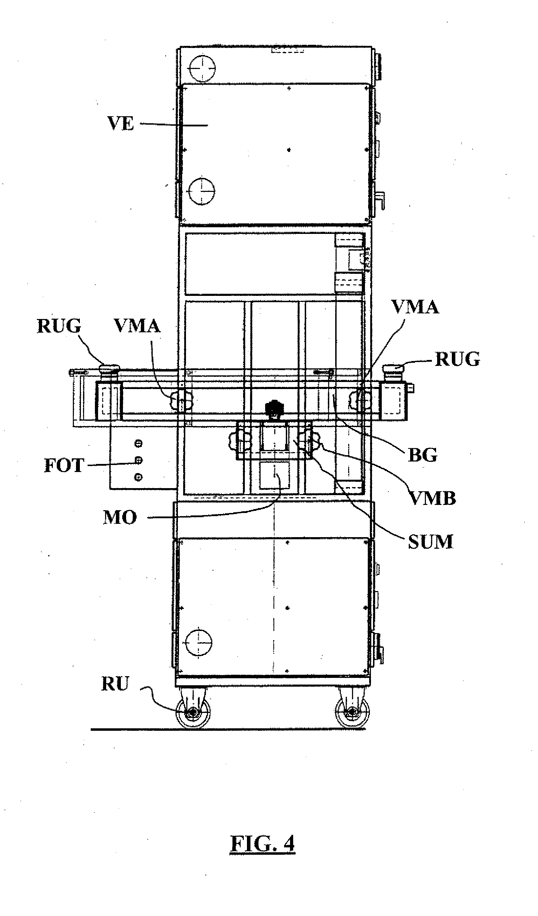

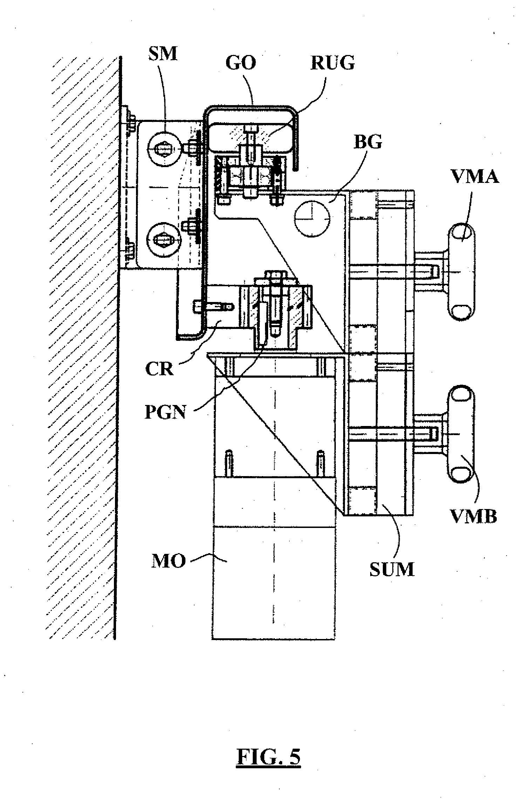

The ventilation units VE are connected to the horizontal guide GO by means of a system shown in figures 4 and 5.

The guide GO is fixed to the wall by means of a series of adjustable wall supports SM. The guide GO is provided at the top with an upturned U- shaped element and at the bottom with a rack CR. The upturned U-shaped element at the top engages with a pair of guide wheels RUG, rotating on a horizontal plane, connected to a guide arm BG for each ventilation unit VE: the guide arm BG is fixed to but can be removed from the ventilation unit VE by means of two knob fastening screws VMA. During horizontal movement the ventilation unit VE remains connected to the horizontal guide GO via the guide arm BG and rotation of the guide wheels RUG, with diameter slightly smaller than the internal width of the upturned U-shaped element of the guide GO.

A motor MO can be applied to the ventilation unit VE by means of a motor support SUM. The latter is fixed to but can be removed from the ventilation unit VE by means of two knob fastening screws VMB. The motor rotates a pinion PGN connected to the rack CR. The movement of the ventilation unit VE and related shelves SC connected can therefore be motorised. The motor MO is controlled via an electrical control system CNT, with related control push-button panels PUL on the front of the shelving SC. During operation an operator activates the push-button panels PUL and the motor MO moves horizontally forward or back the required ventilation unit VE and related shelving SC connected. Remote control can also be provided, for example with a remote control unit.

With reference to figures 1 and 2, the connection system provides for the following elements starting from the horizontal guide GO: the guide arm BG described above; a shelf connection arm BAG which connects the ventilation unit VE to the first shelf SC with a pair of front and back connections; subsequent connection systems between shelves SAS, in front-back pairs, an embodiment example of which is shown in the exploded drawing of fig. 2, by means of two projecting slots interconnected by a key which fits into the matching slots and can be easily removed.

It is important to note that horizontal interconnection points are provided between horizontal guide GO, ventilation unit VE and shelves SC which lie on horizontal straight lines, one for each interconnection. In this way the various elements are securely interconnected during forward-back movement, but at the same time they can pivot with respect to each other in a vertical direction, thus compensating for imperfections in the floor surface that can slant and move the elements away from each other vertically. This prevents vertical torsion of the structures.

As shown in figure 4, a photocell system FOT is provided, with one part fixed to the wall and one part movable on the ventilation unit VE, controlled by the electrical control system CNT, for correct horizontal positioning of each ventilation unit VE. Stroke end forward and back controls can be provided, and a central rest position, with maximum horizontal forward-back movement fixed as required.

As shown in figure 1, a directional lever LDR can be provided which, when operated, can block the pivoting of a wheel RU of the shelf SC in a fixed position, for example longitudinal, to facilitate manual movement of the related shelf, when released.

The advantages obtained with the system subject of the invention are obvious.

Firstly, movement of the shelves is ergonomically facilitated: with minimum effort the operator can move two double-front shelves simultaneously. Some guidelines permit a maximum acceptable operator force of 200 N to move the shelves and 100 N to keep the shelves moving: with the system subject of the invention the forces are in the region of 120 and 80 N respectively.

The system does not require guides or rails on the floor, and the pivoting wheels RU can run freely. Both manual and motorised movement is harmonious and, thanks to the wall guides (made of steel, for example), the floor is not encumbered by rails obstructing cleaning and passage of the operators with transporters and/or laminar flow cabins, and the ceiling is not overloaded with supporting structures to the detriment of the services (room lighting and ventilation) which are now incorporated in the false ceiling or in purposely provided recesses in the ceiling.

All the various elements can be easily connected and disconnected from each other, and the motor MO can also be fitted at a later stage; the system can also operate without electricity, as the motor can be disconnected.

The quick connection/release systems allow easy removal of the shelves, for washing and sterilising, and the ventilation units, for decontamination.

Leaving a minimum gap (from 450 mm, for example) between the movable units, optimal use is made of the space available at the animal housing premises.

The horizontal guide GO can also be installed near doors or apertures that interrupt the wall. In this case the corresponding parts of the guide are designed to be removed or raised by means of a hinge. If a passage is required through the aperture, the corresponding part of the guide is removed or raised, and then refitted. Variations on the non-restrictive example described are possible, while remaining within the protective scope of the present invention, comprising all the equivalent embodiments for a person skilled in the art.

For example two or more parallel wall guides could be provided or two or more connection/release points in the vertical direction.

From the above description a person skilled in the art is able to produce the subject of the invention without introducing further construction details.

## Claims

1. Ventilated shelving storage system for cages containing laboratory animals, **characterised in that** it comprises:
- one or more horizontal wall guides (GO);
- one or more shelf ventilation units (VE), connected to said one or more horizontal guides (GO);
- one or more ventilated shelves (SC) connected in series to each of said ventilation units (VE), said ventilation units (VE) with related ventilated shelving (SC) being able to run horizontally along said horizontal guides (GO).

2. Storage system as in claim 1, **characterised in that** said ventilation units (VE) are connected to said horizontal guides (GO) so that they can be removed by means of a removable guide arm (BG) which comprises guide wheels (RUG) engaged in said horizontal guides (GO).

3. Storage system as in claim 1, **characterised in that** said ventilation units (VE) run along the horizontal guides (GO) by means of a removable motorised system (MO).

4. Storage system as in claim 1, **characterised in that** one or more ventilated shelves (SC) are connected in series to each other and to each of said ventilation units (VE) with interconnection points (BAG, SAS) in substantially horizontal directions, so that they are securely interconnected for horizontal movement but at the same time can pivot with respect to each other in a vertical direction, thus compensating for imperfections in the floor surface.

5. Storage system as in claim 3, **characterised in that** said removable motorised system (MO) rotates a pinion (PGN) connected to a rack (CR) forming part of said horizontal guide (GO).

6. Storage system as in claim 3, **characterised in that** said motorised system (MO) is controlled by an electrical control system (CNT), with push-button panels for activation (PUL) positioned on the front of the ventilated shelving (SC).

7. Storage system as in claim 3, **characterised in that** said motorised system (MO) is controlled via a remote-controlled electrical control system (CNT).

8. Storage system as in claim 3, **characterised in that** said motorised system (MO) comprises a photocell system (FOT), controlled by said electrical control system (CNT), for correct horizontal positioning of each ventilation unit (VE).

9. Storage system as in claim 1, **characterised in that** said one or more horizontal guides (GO) are also installed near doors or apertures that interrupt the wall, comprising corresponding guide parts that can be removed or raised by means of a hinge.

10. Storage system as in claim 1, **characterised in that** said ventilation units (VE) with related ventilated shelving (SC) run horizontally by means of pivoting wheels (RU) on the floor.

11. Storage system as in claim 10, **characterised in that** a directional lever (LDR) is provided which, when operated, can block the pivoting of a wheel (RU) of a ventilated shelf (SC) in a fixed position, for example longitudinal, to facilitate manual movement, when said ventilated shelf is released.
